# DEMANDE DE BREVET EUROPEEN

(11) **EP 1 715 450 A1**
(43) Date de publication de la demande: **25.10.2006**
(21) Numéro de dépôt: 05008431.8
(22) Date de dépôt: 19.04.2005
(51) Int. Cl.: G06Q 10/00

(54) **Système et procédé informatisés de gestion de clientèle**

(71) Demandeur: Delahaye, Frédéric, 59136 Wavrin (FR); Delahaye, Marie Christine, 59136 Wavrin (FR)
(72) Inventeur: Delahaye, Frédéric, 59136 Wavrin (FR); Delahaye, Marie Christine, 59136 Wavrin (FR)
(74) Mandataire: Hennion, Jean-Claude

(57) **Abrégé**

L'invention concerne la gestion informatisée de clientèle, et permet notamment à un vendeur de prendre en charge de façon ordonnée les clients en fonction de leur arrivée.

Le procédé comprend la détection du passage d'une personne, la transmission, vers une unité centrale de traitement, des informations relatives à la détection. De façon caractéristique, le procédé comprend également, à chaque passage détecté, la différenciation entre un passage en entrée et en sortie. Lors d'un passage en entrée, les informations relatives à la détection du passage sont classées dans une première base de données, en fonction de l'ordre des passages en entrées détectés. Par ailleurs, au moins une partie des informations stockées dans la première base de données est présentée au vendeur sur un terminal, dans l'ordre des passages en entrées détectés.

Le système comprend un détecteur de passage de personnes, une unité centrale de traitement, un terminal, et des moyens de transmission vers l'unité centrale, des informations relatives aux passages détectés. De façon caractéristique, le système comprend également une première base de données stockant les informations relatives à chaque passage détecté en fonction de l'ordre des passages, et des moyens de différenciation entre un passage en entrée et en sortie.

## Description

La présente invention a pour objet un système et un procédé informatisés de gestion de clientèle. Plus précisément, l'invention concerne un système et un procédé de gestion de la clientèle qui permet à un utilisateur ou vendeur de prendre en charge de façon ordonnée les clients en fonction de leur arrivée.

On connaît déjà des systèmes et procédés permettant cette prise en charge ordonnée des clients par un vendeur. Par exemple, FR 2 822 977 décrit un système dans lequel le client, après avoir saisi sa demande, ou au moment de la saisie de sa demande, est pris en photographie par déclenchement volontaire ou non d'un appareil. Sa demande ainsi que la photographie numérisée sont transmises à un terminal et affichées sur celui-ci. Le vendeur peut alors prendre connaissance de chaque demande associée à la photographie de la personne demandeuse, par l'intermédiaire du terminal.

Un des inconvénients de ce système est qu'il nécessite une saisie de la demande de la part du client, donc une action de la part de celui-ci.

On connaît par ailleurs des systèmes et procédés permettant la détection automatique du passage d'une personne à proximité d'un détecteur, en particulier dans un but de surveillance de l'accès à certains immeubles ou sites industriels. Par exemple, FR 2 672 761 décrit un système dans lequel des moyens de détection sont déclenchés automatiquement lorsqu'une personne s'approche d'une caméra. La photographie ou image de chaque personne détectée est transmise à une unité centrale et stockée de façon ordonnée, de sorte qu'un utilisateur puisse contrôler instantanément ou en différé les personnes qui accèdent au site en question.

Toutefois, un tel système fonctionne automatiquement sans distinction entre un passage d'une personne à proximité de la caméra en entrée et un passage d'une personne à proximité de cette caméra en sortie. Une des conséquences est la surcharge du système, en particulier dans des applications où les allers et venues quotidiens, donc les détections, sont très fréquents.

Le problème qui se pose alors est donc de gérer automatiquement la clientèle de façon ordonnée, en fonction de l'arrivée de chaque client, sans surcharger l'ensemble du système.

L'objet de l'invention est donc d'apporter une solution au problème précité parmi d'autres problèmes.

L'invention se rapporte donc, selon un premier aspect à un procédé de gestion de clientèle qui comprend une étape de détection du passage d'une personne à proximité d'un détecteur, une étape de transmission, à une unité centrale de traitement d'information, des informations relatives à la détection du passage de la personne à proximité du détecteur.

De façon caractéristique, le procédé de l'invention comprend en outre, à chaque passage détecté, une étape de différenciation entre un passage en entrée et un passage en sortie. Lors d'un passage en entrée, une étape est mise en oeuvre qui permet de classer, en fonction de l'ordre des passages en entrées détectés, les informations relatives à la détection du passage, dans une première base de données. Par ailleurs, selon le procédé de l'invention, au moins une partie des informations stockées dans la première base de données est présentée à l'utilisateur sur un terminal dans l'ordre des passages en entrées détectés.

Ainsi, le procédé de l'invention permet avantageusement à l'utilisateur de gérer les personnes entrantes dans l'ordre d'arrivée sans avoir à surveiller les entrées et les sorties de chaque personne.

Dans une première variante de mise en oeuvre, une personne étant munie d'un dispositif personnel d'identification, l'étape de détection du passage de cette personne comprend une étape de lecture des informations personnelles d'identification relatives à cette personne, stockées sur le dispositif personnel d'identification.

De préférence, l'étape de transmission, à l'unité centrale de traitement d'information, des informations relatives à la détection du passage de la personne, comprend une étape de transmission des informations personnelles d'identification relatives à la personne, stockées sur ledit dispositif personnel d'identification.

Dans une deuxième variante, éventuellement en combinaison avec la première, l'étape de détection du passage de la personne comprend une étape de prise d'une photographie numérique de cette personne.

De préférence, l'étape de transmission, à l'unité centrale de traitement d'information, des informations relatives à la détection du passage de la personne, comprend une étape de transmission de la photographie numérique.

Dans une troisième variante, éventuellement en combinaison avec une ou plusieurs quelconques des variantes précédentes, l'étape de différenciation entre un passage en entrée et un passage en sortie comprend une étape d'interrogation de la première base de données, le passage étant qualifié de passage en entrée si les informations relatives à la détection du passage de la personne, transmises à l'unité centrale de traitement d'information, ne sont pas déjà présentes dans la première base de données, et le passage étant qualifié de passage en sortie sinon.

De préférence, lorsque le passage est qualifié de passage en sortie, les informations relatives à la détection du passage de la personne, transmises à l'unité centrale de traitement d'information, sont supprimées de la première base de données.

Dans ce cas, les informations relatives aux détections respectives des passages des personnes stockées dans la première base de données peuvent être réorganisées pour tenir compte de la suppression.

Lorsque le passage est qualifié de passage en entrée, une deuxième base de donnée, contenant des informations relatives à au moins une personne, est interrogée.

Dans ce cas, lorsque la deuxième base de données contient des informations relatives à la personne dont le passage a été qualifié de passage en entrée, ces informations peuvent être insérées dans la première base de données.

Dans une quatrième variante, éventuellement en combinaison avec une ou plusieurs quelconques des variantes précédentes, l'étape de différenciation entre un passage en entrée et un passage en sortie comprend une étape d'analyse comparative des informations relatives à la détection du passage et des informations stockées dans la première base de données.

Dans une autre variante, éventuellement en combinaison avec une ou plusieurs quelconques des variantes précédentes, l'étape de différenciation entre un passage en entrée et un passage en sortie comprend une étape d'analyse biométrique des informations relatives à la détection du passage et des informations stockées dans la première base de données.

Dans une autre variante encore, éventuellement en combinaison avec une ou plusieurs quelconques des précédentes, l'utilisateur déclenche la présentation sur le terminal des informations relatives à la personne suivante, dans l'ordre des passages en entrée détectés.

De préférence, ce déclenchement se fait par l'intermédiaire d'un clavier ou d'un dispositif de pointage ou d'un écran tactile ou d'une commande par la voix.

De préférence également, le déclenchement provoque l'extraction, par l'unité centrale de traitement d'information des informations relatives à la personne suivante dans l'ordre des passages en entrée détectés, à partir de la première base de données, et l'affichage de ces informations sur le terminal.

L'invention se rapporte également, selon un deuxième aspect, à un système de gestion de clientèle qui comprend un détecteur de passage de personnes, une unité centrale de traitement d'information, un terminal, et des moyens de transmission, à l'unité centrale de traitement d'information, des informations relatives au passage de personnes détectées par le détecteur.

De façon caractéristique, le système de l'invention comprend en outre une première base de données dans laquelle sont stockées les informations relatives au passage de chaque personne détectée par le détecteur en fonction de l'ordre des passages respectifs à proximité du détecteur, et des moyens de différenciation entre un passage en entrée et un passage en sortie de chaque personne détectée.

Dans une première variante de réalisation, le système de l'invention comprend en outre des moyens aptes à prendre une photographie numérique d'une personne détectée par le détecteur.

De préférence, les moyens de transmission, à l'unité de traitement d'information, des informations relatives au passage de personnes détectées par le détecteur sont aussi des moyens de transmission de la photographie numérique de ladite personne prise par les moyens aptes à prendre cette photographie numérique.

Dans une deuxième variante, éventuellement en combinaison avec la première, le système comprend au moins un dispositif personnel d'identification, sur lequel sont stockées des informations personnelles d'identification relatives à une personne, et des moyens de lecture des informations personnelles d'identification et de transmission de ces informations à l'unité centrale de traitement

De préférence, les informations personnelles d'identification relatives à une personne, stockées dans le dispositif personnel d'identification, comprennent la photographie numérique de la personne.

Le dispositif personnel d'identification (DPI) peut être un dispositif portable qui communique sans fil avec les moyens de lecture et de transmission. Il peut s'agir par exemple d'un dispositif de type carte à puce ou téléphone portable ou assistant numérique personnel.

Dans une troisième variante, éventuellement en combinaison avec une ou plusieurs quelconques des précédentes, le système de l'invention comprend une deuxième base de données dans laquelle sont stockées des informations relatives à au moins une personne.

Les informations relatives à au moins une personne stockées dans cette deuxième base de données peuvent comprendre la photographie numérique de la personne.

Dans une quatrième variante, éventuellement en combinaison avec une ou plusieurs quelconques des précédentes, le terminal comprend un moyen d'affichage des informations relatives à chaque personne détectée par le détecteur dans l'ordre de leurs passages respectifs à proximité de ce détecteur.

Dans une autre variante, éventuellement en combinaison avec une ou plusieurs quelconques des précédentes, le terminal est un terminal portable qui communique sans fil avec l'unité centrale de traitement d'information. Ce terminal peut par exemple être du type téléphone portable ou assistant numérique personnel.

Dans une autre variante encore, éventuellement en combinaison avec une ou plusieurs quelconques des précédentes, les moyens de différenciation entre un passage en entrée et un passage en sortie comprennent un moyen d'analyse comparative des informations relatives à une personne dont le passage a été détecté et des informations stockées dans ladite première base de données.

De préférence, les moyens de différenciation entre un passage en entrée et un passage en sortie comprennent un moyen d'analyse biométrique des informations relatives à une personne dont le passage a été détecté et des informations stockées dans la première base de données.

D'autres caractéristiques et avantages de l'invention apparaîtront plus clairement et de manière complète à la lecture de la description ci-après des variantes préférées de réalisation du système et de mise en oeuvre du procédé, lesquelles sont données à titre d'exemples non limitatifs et en référence aux dessins annexés suivants.
- figure 1 : représente schématiquement le système de l'invention dans un exemple de réalisation,
- figure 2a : représente schématiquement une première partie du procédé de l'invention,
- figure 2b : représente schématiquement une deuxième partie du procédé de l'invention

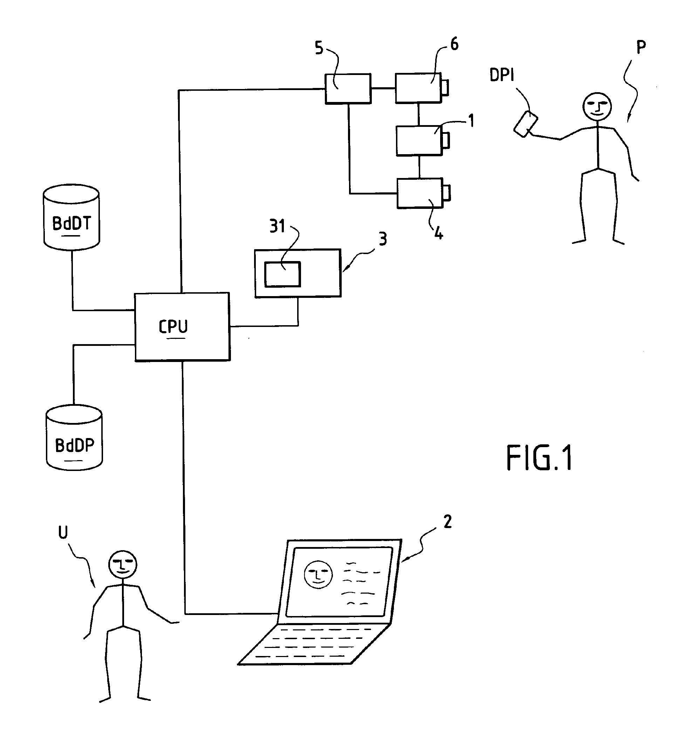

La figure 1 représente schématiquement le système de l'invention dans un exemple de réalisation.

Le système de l'invention, dans cet exemple, comprend un détecteur 1 de passage d'une personne P. Ce détecteur 1 peut être d'un type classique comme par exemple un détecteur de coupure d'un rayon lumineux par une personne P.

Le système comprend également un appareil photographique 4 de type classique, permettant de prendre des photographies numériques. Lors de la détection du passage de la personne P, l'appareil 4 est déclenché. La photographie numérique ainsi prise est transmise par l'intermédiaire de moyens de transmission classiques 5 à un ordinateur central, ou unité centrale de traitement d'information CPU.

La personne P peut éventuellement être porteuse d'un dispositif personnel d'identification DPI sur lequel sont stockées un certain nombre d'informations personnelles d'identification, dont éventuellement la photographie de la personne P. Dans ce cas, lors de la détection du passage de la personne P, des moyens de lecture 6 sont activés qui permettent de lire les informations stockées sur ce dispositif personnel d'identification DPI. Si ce dispositif DPI contient effectivement la photographie de la personne P, alors l'appareil 4 ne sera pas déclenché. Les informations personnelles d'identification, dont l'éventuelle photographie, stockées sur le dispositif personnel d'identification DPI, et lues par les moyens de lecture 6, sont transmises à l'unité centrale de traitement CPU par le biais des moyens de transmission 5.

Éventuellement, les moyens de lecture 6 peuvent eux-mêmes comprendre des moyens de transmission. Il peut alors s'agir de moyens de transmission distincts des moyens de transmission 5, ou bien de moyens de transmission qui remplacent les moyens de transmission 5 notamment pour la transmission de l'éventuelle photographie prise par l'appareil 4.

Idéalement, la lecture des informations contenues dans le dispositif personnel d'identification DPI est une lecture à distance, sans fil. Ce dispositif personnel d'identification DPI peut effectivement être une carte à puce, un téléphone portable, ou encore un assistant numérique personnel.

La transmission des informations à l'unité centrale CPU par les moyens de transmission 5 peut également être une transmission sans fil.

L'unité centrale CPU est reliée à une première base de données dite base de données temporaire BdDT et éventuellement à une deuxième base de données dite base de données permanente BdDP.

Dans la base de données temporaire BdDT sont stockées les informations relatives au passage de chaque personne P détectée par le détecteur 1, en fonction de l'ordre des passages respectifs. Il peut s'agir par exemple de la photographie de chaque personne, que celle-ci provienne de l'appareil 4 ou du dispositif personnel d'identification DPI. Il peut s'agir également de l'ensemble des informations personnelles d'identification préalablement lues à partir du dispositif personnel d'identification DPI.

Le système comprend également des moyens 3 permettant de distinguer entre un passage en entrée et un passage en sortie de chaque personne P détectée par le détecteur 1.

Un poste terminal 2 est relié à l'unité centrale CPU. Ce terminal 2 permet à l'utilisateur U de visualiser les informations relatives à chaque personne P détectée en entrée par le détecteur 1, dans l'ordre des passages en entrée. Typiquement, l'utilisateur U peut être un vendeur ou n'importe quelle personne chargée de prendre en charge chaque personne ou client P.

La liaison entre le terminal 2 est l'unité central CPU peut éventuellement être une liaison sans fil, le terminal 2 étant alors par exemple de type téléphone portable ou assistant numérique personnel.

Dans la base de données permanente BdDP sont stockées des informations relatives à une ou plusieurs personnes P, par exemple clients habituels. Ces informations sont par exemple des informations personnelles d'identification, dont éventuellement une photographie. À ces informations peuvent s'ajouter d'autres informations à caractère commercial par exemple.

Les moyens 3 permettant de distinguer entre un passage en entrée et un passage en sortie de chaque personne P détectée par le détecteur 1, sont commandés par l'unité centrale CPU. Ils peuvent par exemple contenir un module 31 d'analyse comparative, dont le rôle est de comparer les informations relatives à une personne P dont le passage a été détecté par le détecteur 1, avec les informations stockées dans la base de données temporaire BdDT.

Ces moyens 3 peuvent éventuellement comprendre un module 31 d'analyse biométrique. Par exemple, dans le cas où les informations relatives aux personnes dont le passage a été détecté par le détecteur 1, comprennent la photographie, ce module 31 sera chargé de comparer les caractéristiques biométrique provenant de la photographie d'une personne P dont le passage vient d'être détecté par le détecteur 1, avec celles provenant des photographies des personnes P stockées dans la base de données temporaire BdDT.

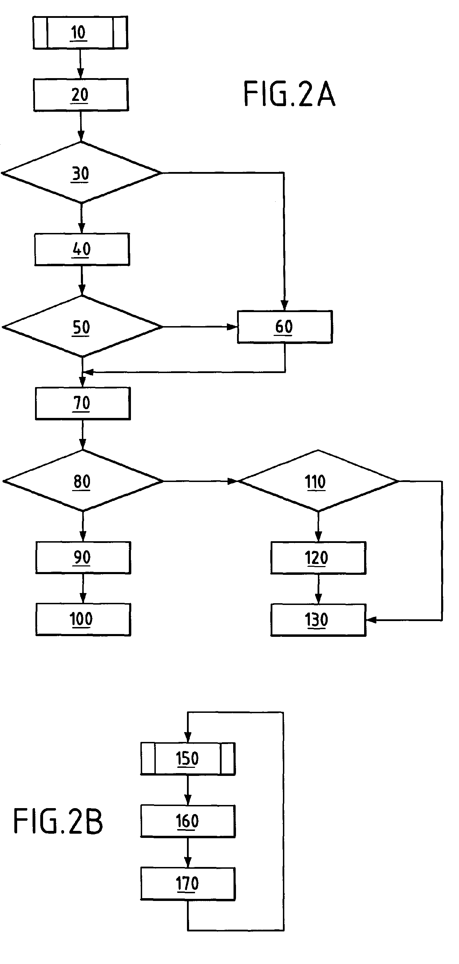

La figure 2a représente schématiquement une première partie du procédé de l'invention mis en oeuvre par le système de l'invention telle qu'il vient d'être décrit.

À l'étape 10, une personne P passe à proximité du détecteur 1. À l'étape 20, le passage de la personne P et détecté par le détecteur 1.

Si la personne P est munie d'un dispositif personnel d'identification DPI tel que décrit précédemment, les informations stockées sur ce dispositif personnel d'identification DPI, y compris éventuellement la photographie, sont lues par les moyens 6 de lecture, au cours de l'étape 40.

Les moyens 6 de lecture peuvent par exemple être capables d'émettre un signal, après activation par le détecteur 1 suite à la détection à l'étape 20, destiné à tester la présence du dispositif personnel d'identification DPI. Si celui-ci est présent, il peut renvoyer à son tour un signal déterminé vers les moyens 6 de lecture, ce qui enclenche la lecture effective des informations stockées sur le dispositif personnel d'identification DPI. Cette opération de test de la présence du dispositif personnel d'identification DPI est schématisée, à la figure 2a, par l'étape 30.

Si le test révèle l'absence d'un tel dispositif personnel d'identification DPI, l'étape 60 et mise en oeuvre qui permet la prise de la photographie de la personne P par l'appareil photographique 4.

Si, par contre, le test révèle la présence d'un tel dispositif personnel d'identification DPI, et après la mise en oeuvre de l'étape 40 de lecture des informations stockées sur ce dispositif, l'étape 50 est mise en oeuvre qui permet de tester la présence, parmi les informations lues à l'étape 40, d'une photographie. Ce test peut être réalisé au niveau des moyens 6 de lecture, avant transmission à l'unité centrale CPU.

Si l'étape 50 révèle l'absence d'une photographie numérique parmi les informations d'identification provenant du dispositif personnel d'identification DPI, l'étape 60 ci-dessus décrite est mise en oeuvre, puis l'ensemble des informations est transmis à l'unité centrale de traitement CPU par l'intermédiaire par exemple des moyens de transmission 5, au cours de l'étape 70.

Si, par contre, une photographie numérique est présente parmi les informations d'identification provenant du dispositif personnel d'identification DPI, l'étape 70 de transmission est bien sûr directement mise en oeuvre, sans qu'il soit besoin de déclencher la prise d'une photographie numérique par l'appareil 4 (étape 60).

L'étape 80 consiste à déterminer si le passage détecté à l'étape 20 est un passage en entrée ou un passage en sortie. Pour ce faire, la base de données temporaire BdDT est interrogée, et les informations contenues dans cette base de données sont comparées aux informations précédemment transmises au cours de l'étape 70.

Dans le cas où la seule information transmise au cours de l'étape 70 est la photographie numérique, cette comparaison peut consister en une analyse biométrique au cours de laquelle les caractéristiques de la photographie numérique transmise sont comparées avec les caractéristiques de chacune des photographies numériques stockées dans la base de données temporaire.

Même si la photographie numérique n'est pas la seule information transmise au cours de l'étape 70, la comparaison pourra toujours consister en une telle analyse biométrique.

Si l'étape 80 révèle que les informations transmises au cours de l'étape 70 sont déjà contenues dans la base de données temporaire BdDT, alors le passage détecté au cours de l'étape 20 et qualifiée de passage en sortie. Dans ce cas, on peut prévoir à l'étape 90 la suppression, dans la base de données temporaire BdDT, des informations relatives à la personne P dont le passage en sortie a été détecté à l'étape 20, puis la réorganisation à l'étape 100 des informations relatives aux détections respectives des passages des personnes stockées dans la base de données temporaire BdDT.

Ainsi, les informations relatives à une personne ne restent dans cette base de données pour une personne P que le temps pendant lequel cette personne reste présente sur les lieux, d'où le qualificatif temporaire donné à cette base de données.

On peut aussi envisager, par exemple, de ne pas supprimer les informations relatives à une personne lors d'un passage en sortie, mais de marquer l'information dans la base de données avec un indicateur de présence / absence et éventuellement un horaire d'entrée / sortie. Dans ce cas, la mise en oeuvre de l'étape 80 sera quelque peu différente. En effet, il ne suffira pas de déterminer si les informations transmises au cours de l'étape 70 sont déjà contenues ou non dans la base de données temporaire BdDT. Il faudra également prendre en compte l'indicateur de présence / absence, ainsi qu'éventuellement les horaires d'entrée / sortie.

Quoi qu'il en soit, si, par contre, l'étape 80 révèle que les informations transmises au cours de l'étape 70 ne sont pas déjà contenues dans la base de données temporaire BdDT, et/ou si l'indicateur de présence / absence, ainsi qu'éventuellement les horaires d'entrée / sortie en donnent l'indication, alors le passage détecté au cours de l'étape 20 et qualifié de passage en entrée.

Dans ce cas, l'étape 110 et mise en oeuvre qui permet d'interroger l'éventuelle deuxième base de données, dite base de données permanente BdDP, pour déterminer si les informations transmises au cours de l'étape 70 ne sont pas déjà présentes dans cette base de données permanente BdDP.

Si tel n'est pas le cas, c'est-à-dire si l'on ne retrouve pas dans la base de données permanente BdDP les informations transmises, alors l'étape 130 et directement mise en oeuvre qui permet l'insertion de ces informations transmises dans la base de données temporaire BdDT, éventuellement avec un marquage d'entrée et/ou un horaire d'entrée, et en tout état de cause avec un numéro d'ordre d'arrivée ou tout marquage de l'information pouvant jouer le même rôle que le numéro d'ordre d'arrivée.

Si, par contre, on retrouve bien les informations en question, celles-ci ainsi que tout ou partie des informations additionnelles, par exemple des informations additionnelles à caractère commercial, sont extraites de la base de données permanente BdDP au cours de l'étape 120, avant insertion dans la base de données temporaire BdDT au cours de l'étape 130 précédemment décrite.

La figure 2b représente schématiquement une deuxième partie du procédé de l'invention.

À l'étape 150, l'utilisateur ou vendeur U, lorsqu'il est disponible pour servir une personne ou client P, après avoir par exemple terminé de servir le client précédent, déclenche l'affichage, sur son terminal 2, d'au moins une partie des informations relatives à la personne P suivante dans l'ordre des arrivées, qui sont extraites de la base de données temporaire BdDT à l'étape 160, la présentation des informations ainsi extraites étant effectivement mise en oeuvre à l'étape 170.

Le déclenchement peut se faire par tout dispositif d'entrée d'informations, tel qu'un clavier, un dispositif de pointage, un écran tactile ou même une commande vocale par exemple. Un type de déclenchement ou un autre peut être particulièrement adapté à un type de terminal ou un autre. Le terminal peut en effet être un ordinateur classique, aussi bien qu'un dispositif portable tel qu'un téléphone portable ou un assistant numérique personnel.

L'ensemble de la description ci-dessus est donné à titre d'exemple et n'est pas limitatif de l'invention.

En particulier, la première base de données dite base de données temporaire BdDT, et la deuxième base de données dite base de données permanente BdDP, sont présentées fonctionnellement distinctes l'une de l'autre, mais peuvent évidemment être groupée en une seule entité physique divisée en deux zones principales de stockage d'informations. Le terme base de données n'est d'ailleurs pas non plus limitatif de l'invention. Il est à comprendre ici comme désignant tous moyens permettant d'archiver de façon structurée des informations en vue d'en faciliter ultérieurement l'extraction. On comprend donc que, par exemple, le terme de fichier pourrait tout aussi bien être utilisé pour désigner le même moyen.

Par ailleurs, chacun des éléments appareil photographiques 4, détecteur 1, moyen de lecture et de transmission 6 et moyen de transmission 5, est présenté fonctionnellement séparé l'un des autres. Il est cependant tout à fait possible d'envisager de les grouper physiquement. En particulier, comme il a déjà été dit plus haut, les moyens de transmission 5 et les moyens de lecture et de transmission 6 pourraient tout aussi bien consister en des moyens uniques de lecture et de transmission.

D'autre part, on comprend bien que le terme d'unité centrale de traitement CPU désigne la fonction, et que celle-ci peut être assurée par un serveur, ou un ordinateur classique. Les deux bases de données BdDT et BdDP peuvent se trouver physiquement distinctes d'un tel serveur ou ordinateur, ou bien faire partie intégrante de ce dernier.

Bien sûr, les moyens 3 de différenciation, qui comprennent le module 31 d'analyse, seront de préférence stockés sur le serveur ou l'ordinateur classique, même si cela n'est pas absolument nécessaire.

Egalement, et tout particulièrement dans les petites unités de vente dans lesquelles il n'y aurait par exemple qu'un seul utilisateur / vendeur, le terminal 2 et l'unité centrale de traitement CPU peuvent très bien être une seule et même unité, un ordinateur classique par exemple.

Enfin, même si l'invention est décrite relativement à un seul détecteur 1 situé à un point de passage particulier, on pourra tout aussi bien avoir plusieurs détecteurs situés à différents points de passage, chacun éventuellement couplé à un appareil photographique. Dans ce cas, l'unité centrale de traitement est capable, grâce à des moyens de gestion des différentes informations en provenance de chacun des détecteurs, de gérer le passage en entrée ou en sortie de toute personne à proximité de chacun des détecteurs. Pour chaque passage, les informations de détection peuvent alors comprendre un identificateur du détecteur et/ou de la zone de passage. Ceci permet notamment, mais pas uniquement, de réaliser des statistiques sur les zones de passage. On comprend donc ainsi que le nombre de détecteurs n'est pas limitatif de l'invention.

## Revendications

1. Procédé de gestion de clientèle comprenant :
- une étape de détection du passage d'une personne (P) à proximité d'un détecteur (1),
- une étape de transmission, à une unité centrale de traitement d'information (CPU), des informations relatives à la détection du passage de ladite personne (P),
**caractérisé en ce qu'**il comprend en outre :
- à chaque passage détecté, une étape de différenciation entre un passage en entrée et un passage en sortie,
- lors d'un passage en entrée, une étape de classement, en fonction de l'ordre des passages en entrées détectés, des informations relatives à la détection dudit passage, dans une première base de données (BdDT),
- une étape de présentation à l'utilisateur (U) sur un terminal (2) d'au moins une partie des informations stockées dans ladite première base de données (BdDT) dans l'ordre des passages en entrées détectés.

2. Procédé selon la revendication 1, **caractérisé en ce que**, la personne (P) étant munie d'un dispositif personnel d'identification (DPI), l'étape de détection du passage de ladite personne (P) comprend une étape de lecture des informations personnelles d'identification relatives à la personne (P) stockées sur ledit dispositif personnel d'identification (DPI).

3. Procédé selon la revendication 2, **caractérisé en ce que** l'étape de transmission, à une unité centrale de traitement d'information (CPU), des informations relatives à la détection du passage de ladite personne (P), comprend une étape de transmission des informations personnelles d'identification relatives à la personne (P) stockées sur ledit dispositif personnel d'identification (DPI).

4. Procédé selon l'une quelconque des revendications 1 à 3, **caractérisé en ce que** l'étape de détection du passage de ladite personne (P) comprend une étape de prise d'une photographie numérique de ladite personne (P).

5. Procédé selon la revendication 4, **caractérisé en ce que** l'étape de transmission, à ladite unité centrale de traitement d'information (CPU), des informations relatives à la détection du passage de ladite personne (P), comprend une étape de transmission de ladite photographie numérique.

6. Procédé selon l'une quelconque des revendications 1 à 5, **caractérisé en ce que** l'étape de différenciation entre un passage en entrée et un passage en sortie comprend une étape d'interrogation de la première base de données (BdDT), ledit passage étant qualifié de passage en entrée si lesdites informations relatives à la détection du passage de ladite personne (P) transmises à ladite unité centrale de traitement d'information (CPU), ne sont pas déjà présentes dans la première base de données (BdDT), et ledit passage étant qualifié de passage en sortie sinon.

7. Procédé selon la revendication 6, **caractérisé en ce que**, lorsque ledit passage est qualifié de passage en sortie, lesdites informations relatives à la détection du passage de ladite personne (P), transmises à ladite unité centrale de traitement d'information (CPU), sont supprimées de ladite première base de données (BdDT).

8. Procédé selon la revendication 7, **caractérisé en ce que** les informations relatives aux détections respectives des passages des personnes (P) stockées dans ladite première base de données (BdDT) sont réorganisées pour tenir compte de ladite suppression.

9. Procédé selon la revendication 6, **caractérisé en ce que**, lorsque ledit passage est qualifié de passage en entrée, une deuxième base de donnée (BdDP), contenant des informations relatives à au moins une personne, est interrogée.

10. Procédé selon la revendication 9, **caractérisé en ce que**, lorsque ladite deuxième base de données (BdDP) contient des informations relatives à la personne dont le passage a été qualifié de passage en entrée, ces dites informations sont insérées dans la première base de données (BdDT).

11. Procédé selon l'une quelconque des revendications 1 à 10, **caractérisé en ce que** ladite étape de différenciation entre un passage en entrée et un passage en sortie comprend une étape d'analyse comparative des informations relatives à la détection dudit passage et des informations stockées dans ladite première base de données.

12. Procédé selon l'une quelconque des revendications 4 à 10, **caractérisé en ce que** ladite étape de différenciation entre un passage en entrée et un passage en sortie comprend une étape d'analyse biométrique des informations relatives à la détection dudit passage et des informations stockées dans ladite première base de données.

13. Procédé selon l'une quelconque des revendications 1 à 12,
**caractérisé en ce que** l'utilisateur (U) déclenche l'étape de présentation sur ledit terminal (2) des informations relatives à la personne (P) suivante dans l'ordre des passages en entrée détectés.

14. Procédé selon la revendication 13, **caractérisé en ce que** le ledit déclenchement :
- se fait par l'intermédiaire d'un clavier ou d'un dispositif de pointage ou d'un écran tactile ou d'une commande par la voix, et/ou
- provoque l'extraction par ladite unité centrale de traitement d'information (CPU) des informations relatives la personne (P) suivante dans l'ordre des passages en entrée détectés à partir de la première base de données (BdDT), et la présentation de ces dites informations sur ledit terminal (2).

15. Système de gestion de clientèle comprenant un détecteur (1) de passage de personnes (P), une unité centrale de traitement d'information (CPU), un terminal (2) et des moyens (5) de transmission à l'unité de traitement d'information (CPU) des informations relatives au passage de personnes (P) détectées par le détecteur (1), **caractérisé en ce qu'**il comprend en outre une première base de données (BdDT) dans laquelle sont stockées les informations relatives au passage de chaque personne (P) détectée par ledit détecteur (1) en fonction de l'ordre des passages respectifs à proximité du détecteur (1), et des moyens (3) de différenciation entre un passage en entrée et un passage en sortie de chaque personne (P) détectée.

16. Système selon la revendication 15, **caractérisé en ce qu'**il comprend des moyens (4) aptes à prendre une photographie numérique d'une personne (P) détectée par le détecteur (1).

17. Système selon la revendication 16, **caractérisé en ce que** lesdits moyens (5) de transmission à l'unité de traitement d'information (CPU) des informations relatives au passage de personnes (P) détectées par le détecteur (1) sont aussi des moyens de transmission de ladite photographie numérique de ladite personne (P) prise par lesdits moyens (4).

18. Système selon l'une quelconque des revendications 15 à 17, **caractérisé en ce qu'**il comprend au moins un dispositif personnel d'identification (DPI) sur lequel sont stockées des informations personnelles d'identification relatives à une personne (P), et des moyens (6) de lecture et de transmission à ladite unité centrale de traitement (CPU) desdites informations personnelles d'identification.

19. Système selon la revendication 15, **caractérisé en ce que** lesdites informations personnelles d'identification relatives à une personne (P) stockées dans ledit dispositif personnel d'identification (DPI) comprennent la photographie numérique de ladite personne (P).

20. Système selon l'une quelconque des revendications 18 et 19 **caractérisé en ce que** ledit dispositif personnel d'identification (DPI) est un dispositif portable qui communique sans fil avec lesdits moyens (6) de lecture et de transmission.

21. Système selon l'une quelconque des revendications 18 à 20, **caractérisé en ce que** ledit dispositif personnel d'identification (DPI) est de type carte à puce ou téléphone portable ou assistant numérique personnel.

22. Système selon l'une quelconque des revendications 15 à 21, **caractérisé en ce qu'**il comprend une deuxième base de données (BdDP) dans laquelle sont stockées des informations relatives à au moins une personne.

23. Système selon la revendication 22, **caractérisé en ce que** lesdites informations relatives à au moins une personne comprenne la photographie numérique de ladite personne.

24. Système selon l'une quelconque des revendications 15 à 23, **caractérisé en ce que** ledit terminal (2) comprend un moyen d'affichage desdites informations relatives à chaque personne (P) détectée par ledit détecteur (1) dans l'ordre de leurs passages respectifs à proximité du détecteur (1).

25. Système selon l'une quelconque des revendications 15 à 24, **caractérisé en ce que** ledit terminal (2) est un terminal portable qui communique sans fil avec ladite unité centrale de traitement d'information (CPU).

26. Système selon l'une quelconque des revendications 24 et 25, **caractérisé en ce que** ledit terminal (2) est de type téléphone portable ou assistant numérique personnel.

27. Système selon l'une quelconque des revendications 15 à 26, **caractérisé en ce que** lesdits moyens (3) de différenciation entre un passage en entrée et un passage en sortie comprennent un moyen (31) d'analyse comparative des informations relatives à une personne dont le passage a été détecté et des informations stockées dans ladite première base de données.

28. Système selon l'une quelconque des revendications 16 à 26, **caractérisé en ce que** lesdits moyens (3) de différenciation entre un passage en entrée et un passage en sortie comprennent un moyen (31) d'analyse biométrique des informations relatives à une personne dont le passage a été détecté et des informations stockées dans ladite première base de données.
